(19) Europäisches Patentamt / European Patent Office / Office européen des brevets

(11) **EP 2 915 847 A1**

(12) **EUROPEAN PATENT APPLICATION**
published in accordance with Art. 153(4) EPC

(43) Date of publication:
09.09.2015 Bulletin 2015/37

(21) Application number: 13852140.6

(22) Date of filing: 20.09.2013

(51) Int Cl.:
*C08L 61/06* $^{(2006.01)}$     *C08J 5/24* $^{(2006.01)}$
*C08K 5/05* $^{(2006.01)}$     *C08K 7/06* $^{(2006.01)}$

(86) International application number:
PCT/JP2013/075525

(87) International publication number:
WO 2014/069124 (08.05.2014 Gazette 2014/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.11.2012 JP 2012242359

(71) Applicant: Asahi Organic Chemicals Industry Co.,
Ltd.
Nobeoka-shi, Miyazaki 882-8688 (JP)

(72) Inventors:
• KANEIWA, Toshihiko
Niwa-gun
Aichi 480-0105 (JP)
• NISHIMORI, Kazuto
Niwa-gun
Aichi 480-0105 (JP)

(74) Representative: Stuart, Ian Alexander
Mewburn Ellis LLP
City Tower
40 Basinghall Street
London EC2V 5DE (GB)

(54) **RESIN COMPOSITION, AS WELL AS CARBON FIBER-REINFORCED COMPOSITE MATERIAL PRECURSOR, CARBON FIBER-REINFORCED MATERIAL, AND CARBON FIBER-REINFORCED CARBON MATERIAL OBTAINED USING SAID RESIN COMPOSITION**

(57) Provided are: a resin composition which can give a carbon-fiber-reinforced composite material having not only high degrees of flame retardancy and thermal resistance, owing to properties of phenolic resins, but also excellent mechanical properties; a precursor of the carbon-fiber-reinforced composite material obtained by using the resin composition; a carbon-fiber-reinforced composite material formed from the precursor; and a carbon-fiber-reinforced carbon material. The resin composition contains, as essential components, a resol-type phenolic resin, a novolac-type phenolic resin, and at least one alcohol selected from a group consisting of methanol, ethanol and n-propylalcohol.

**Description**

TECHNICAL FIELD

The present invention relates to a resin composition which can give excellent mechanical properties, a precursor of a carbon-fiber-reinforced composite material obtained by using the resin composition, a carbon-fiber-reinforced composite material obtained by forming the precursor, and a carbon-fiber-reinforced carbon material obtained by firing and carbonizing the composite material.

BACKGROUND ART

Various proposals have been made about a resin composition used for a carbon-fiber-reinforced composite material. For example, JP-A-2004-269812 (Patent Document 1) discloses that the carbon-fiber-reinforced composite material having excellent mechanical properties can be obtained by using a resol-type phenolic resin having a molecular weight within a specific range, in a liquid state, as a resin component of the resin composition used for producing the carbon-fiber-reinforced composite material. Patent Document 1 describes that since this resin composition is mainly composed of the phenolic resin, the carbon-fiber-reinforced composite material produced by using the resin composition exhibits a high degree of flame retardancy, so that where the carbon-fiber-reinforced composite material is used for a structural member of a railway car, safety in the event of occurrence of a fire can be assured.

However, the resin composition proposed in Patent Document 1 is specified only by the molecular weight of the resol-type phenolic resin used as the resin component, so that there is a limitation in the improvement of the mechanical properties of the carbon-fiber-reinforced composite material produced by using the resin composition. Namely, in the case where the carbon-fiber-reinforced composite material is used for applications such as the railway car or other transportation equipment which are intended to work on the land and whose requirement for improvement of the mechanical properties is relatively low, the required mechanical properties can be achieved by the use of the resol-type phenolic resin proposed in Patent Document 1, as a matrix of the composite material. However, in the case where the composite material is used for applications such as an aircraft whose requirement for improvement of the mechanical properties is higher, it is difficult to sufficiently achieve the required degrees of the mechanical properties by the use of the resol-type phenolic resin proposed in Patent Document 1, as the matrix of the composite material. Further, it is difficult to control the properties, particularly, a viscosity of the resin composition used in Patent Document 1, so that a preform used to obtain an end product and a method for forming the end product are limited. Accordingly, there are many limitations in terms of a shape of the end product, an intended use of the end product, and a place in which the obtained product can be installed. As a result, there is an inherent problem that the use of the resin composition of Patent Document 1 permits only a limited improvement of an intended structure as a whole.

On the other hand, regarding structural members of the aircraft, studies have been made in order to reduce the weight of the members and to improve the safety in the event of occurrence of a fire. From the viewpoint of assuring the safety in the event of occurrence of a fire, an improvement of the flame retardancy of raw materials is the most important task. In this respect, it is advantageous to use the phenolic resin as the matrix of the materials. However, the mechanical properties obtained by the use of the phenolic resin are inferior to those obtained by the use of an epoxy resin and a vinyl ester resin, which are conventionally used as the matrix of the carbon-fiber-reinforced composite material. Therefore, it is required to improve the mechanical properties of the composite material produced by using the phenolic resin.

PRIOR ART DOCUMENT

PATENT DOCUMENT

Patent Document 1: JP-A-2004-269812

SUMMARY OF THE INVENTION

TECHNICAL PROBLEM

The present invention was made in view of the background art described above. It is therefore an object of the present invention to provide: a resin composition which can give a carbon-fiber-reinforced composite material having not only high degrees of flame retardancy and thermal resistance, owing to the use of the phenolic resin, but also excellent mechanical properties which cannot be exhibited by the conventional carbon-fiber-reinforced composite material produced by using the resol-type phenolic resin as its matrix. It is another object of the invention to provide a precursor of the carbon-fiber-reinforced composite material produced by using the resin composition. Other objects of the invention are to provide the carbon-fiber-reinforced composite material obtained by using the precursor and having the excellent properties, and to provide a carbon-fiber-reinforced carbon material obtained by using the composite material.

SOLUTION TO PROBLEM

The inventors of the present invention made intensive studies on the carbon-fiber-reinforced composite material produced by using the phenolic resin as the matrix, and found that the above-described objects are achieved by producing the intended carbon-fiber-reinforced composite material by using a resin composition containing the resol-type phenolic resin, a novolac-type phenolic resin and a specific alcohol. Namely, in order to achieve the above-described objects, the present invention can be suitably carried out in various forms described below, and these forms can be employed in any combination. It is to be understood that the forms and technical features of the present invention are not limited to those described below and should be understood in view of the concept of the present invention disclosed in the entire description.

(1) A resin composition comprising, as essential components, a resol-type phenolic resin, a novolac-type phenolic resin, and at least one alcohol selected from a group consisting of methanol, ethanol and n-propylalcohol.
(2) The resin composition according to the above-described form (1), wherein the resol-type phenolic resin and the novolac-type phenolic resin are used at a ratio within a range between 95 : 5 and 50 : 50, on a mass basis.
(3) The resin composition according to the above-described form (1) or (2), wherein the at least one alcohol is used in an amount of 1-8 parts by mass per 100 parts by mass of a total amount of the resol-type phenolic resin and the novolac-type phenolic resin.
(4) A precursor of a carbon-fiber-reinforced composite material obtained by impregnating a carbon fiber with the resin composition according to any one of the above-described forms (1) to (3).
(5) The precursor of the carbon-fiber-reinforced composite material according to the above-described form (4), wherein at least one of a PAN-based carbon fiber and a pitch-based carbon fiber is used as the carbon fiber.
(6) The precursor of the carbon-fiber-reinforced composite material according to the above-described form (4) or (5), in the form of a sheet molding compound or a bulk molding compound.
(7) A carbon-fiber-reinforced composite material obtained by forming the precursor according to any one of the above-described forms (4) to (6).
(8) The carbon-fiber-reinforced composite material according to the above-described form (7), obtained by forming the precursor by hot pressing.
(9) A carbon-fiber-reinforced carbon material obtained by firing and carbonizing the carbon-fiber-reinforced composite material according to the above-described form (7) or (8).
(10) A structural member of an aircraft, a railway car or an automobile, or a general industrial structural member, produced by using the carbon-fiber-reinforced composite material according to the above-described form (7) or (8), or the carbon-fiber-reinforced carbon material according to the above-described form (9).

ADVANTAGEOUS EFFECTS OF THE INVENTION

The resin composition according to the present invention contains: the two kinds of phenolic resins, i.e. the resol-type phenolic resin and the novolac-type phenolic resin, as resin components; and the specific alcohol. Therefore, the carbon-fiber-reinforced composite material obtained by using the resin composition as its matrix can exhibit not only high degrees of flame retardancy and thermal resistance, owing to the properties of the phenolic resins, but also high degrees of flexural strength and flexural modulus of elasticity.
Further, the resin composition according to the present invention sufficiently serves as a binder to permit a sufficient effect of the carbon fiber to reinforce the carbon-fiber-reinforced composite material. Also, a viscosity of the resin composition can be controlled within a desired range, so that the carbon fiber can be impregnated with the resin composition by various methods. Therefore, it is possible to advantageously produce the carbon-fiber-reinforced composite material which can be used for various structural members, from the precursor obtained by using the resin composition.

MODES FOR CARRYING OUT THE INVENTION

A resin composition according to the present invention contains a resol-type phenolic resin, a novolac-type phenolic resin and a specific alcohol, as essential components. Both of the resol-type phenolic resin and the novolac-type phenolic resin are obtained by reacting a phenol and an aldehyde with each other in the presence of a suitable catalyst, as is well known in the art. Properties of the resol-type phenolic resin and the novolac-type phenolic resin are not particularly limited. The known resol-type phenolic resins and the known novolac-type phenolic resins are suitably selected and used in the present invention.

Specifically described, the resol-type phenolic resin is generally obtained by reacting the phenol and the aldehyde with each other, by using a basic catalyst, as is well known in the art. A molar ratio (F/P) of the aldehyde (F) to the phenol (P) is not particularly limited, but is preferably held within a range between about 0.7 and about 3.0.

Various known basic substances may be used as the basic catalyst to produce the resol-type phenolic resin. For example, the basic catalyst may be any one or any combination of: alkali metal hydroxides such as sodium hydroxide, lithium hydroxide and potassium hydroxide; ammonia water; tertiary amines such as triethylamine; tetramethylammonium hydroxide; oxides and hydroxides of alkaline-earth metals such as calcium, magnesium and barium; and alkaline substances such as sodium carbonate and hexamethylenetetramine.

The novolac-type phenolic resin is also not particularly limited. The novolac-type phenolic resin suitably used in the present invention is generally obtained by reacting the phenol and the aldehyde with each other, by using an acidic catalyst, as is well known in the art. The molar ratio (F/P) of the aldehyde (F) to the phenol (P) is not particularly limited, but is generally held within a range between about 0.5 and about 0.9.

Various known acidic substances may be suitably selected and used as the acidic catalyst to produce the novolac-type phenolic resin. For example, the acidic catalyst may be any one or any combination of: organic carboxylic acids such as oxalic acid; organic sulfonic acids such as p-toluenesulfonic acid and phenolsulfonic acid; and mineral acids such as hydrochloric acid, sulfuric acid and phosphoric acid.

The phenol used as a material for the resol-type phenolic resin and the novolac-type phenolic resin is not particularly limited. Examples of the phenol include: phenol; cresols such as o-cresol, m-cresol and p-cresol; xylenols such as 2,3-xylenol, 2,4-xylenol, 2,5-xylenol, 2,6-xylenol, 3,4-xylenol and 3,5-xylenol; ethylphenols such as o-ethylphenol, m-ethylphenol and p-ethylphenol; butylphenols such as isopropylphenol, butylphenol and p-tert-butylphenol; alkylphenols such as p-tert-amylphenol, p-octylphenol, p-nonylphenol and p-cumylphenol; halogenated phenols such as fluorophenol, chlorophenol, bromophenol and iodophenol; monovalent substituted phenols such as p-phenylphenol, aminophenol, nitrophenol, dinitrophenol and trinitrophenol; monovalent naphthols such as 1-naphthol and 2-naphthol; polyhydric phenols such as resorcin, alkylresorcin, pyrogallol, catechol, alkylcatechol, hydroquinone, alkylhydroquinone, phloroglucin, bisphenol A, bisphenol F, bisphenol S and dihydroxynaphthalene. Any one or any combination of the above-indicated phenols may be used. Among the above-indicated phenols, phenol, cresol and bisphenol A are preferably used, since these phenols can give a high degree of mechanical strength.

The aldehyde used as another material for the resol-type phenolic resin and the novolac-type phenolic resin, which constitute the resin composition of the present invention, is also not particularly limited. Examples of the aldehyde include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allyl aldehyde, benzaldehyde, crotonaldehyde, acrolein, tetraoxymethylene, phenylacetaldehyde, o-tolualdehyde and salicylaldehyde. Any one or any combination of the above-indicated aldehydes may be used. Among the above-indicated aldehydes, formaldehyde and paraformaldehyde are preferably used, since these aldehydes exhibit a high degree of reactivity at the time of synthesis.

A number average molecular weight of the resol-type phenolic resin used in the present invention is preferably held within a range between about 300 and about 800. A number average molecular weight of the novolac-type phenolic resin used in the present invention is not smaller than 500, and is preferably held within a range between about 800 and about 1500. Use of the resol-type phenolic resin and the novolac-type phenolic resin having the number average molecular weights described above permits an improvement of the mechanical strength of a composite material obtained by forming the resin composition.

In the present invention, the resol-type phenolic resin described above is advantageously used as a matrix. Further, the novolac-type phenolic resin is used in combination with the resol-type phenolic resin, whereby the novolac-type phenolic resin serves as a filler with respect to the resol-type phenolic resin, and also serves as a binder with respect to a carbon fiber.

In the conventional resin composition containing the resol-type phenolic resin, a filler is added to the resin composition so as to increase a solid content in the resin composition, whereby a viscosity of the resin composition is increased to improve ease of handling of the resin composition and a precursor produced by using the resin composition. Particularly, in a method of impregnating the carbon fiber with a pressurized resin composition in order to produce the precursor such as a sheet molding compound (hereinafter abbreviated as SMC) or a bulk molding compound (hereinafter abbreviated as BMS) to be subjected to a forming operation, the resin composition is required to have a viscosity not lower than a predetermined value. However, it is difficult to give the resin composition the required degree of viscosity, by merely adding a thickening agent or other additives to the resin composition. Therefore, an inorganic filler or the like is generally added to the resin composition in order to give the resin composition the required degree of viscosity. However, in the conventional technique, the addition of the filler leads to reduction of a relative amount of a resin component serving as the binder with respect to the carbon fiber. As a result, there arises an inherent problem that an effect of the carbon fiber to reinforce a carbon-fiber-reinforced composite material cannot be sufficiently exhibited, so that the carbon-fiber-reinforced composite material has deteriorated properties, for example.

On the other hand, where the novolac-type phenolic resin is used in combination with the resol-type phenolic resin, as in the present invention, the novolac-type phenolic resin serves as the filler in the resin composition and in the precursor, whereby the resin composition and the precursor can advantageously have viscosities not lower than the predetermined value and high degrees of ease of handling. Further, in the carbon-fiber-reinforced composite material produced by forming the precursor using the resin composition, the novolac-type phenolic resin serves as the binder with respect to the carbon fiber, whereby the effect of the carbon fiber to reinforce the composite material can be sufficiently exhibited.

In the resin composition according to the present invention, the novolac-type phenolic resin introduced in the resin composition is combined with the resol-type phenolic resin as the resin component, through a chemical reaction, so that no interface exists around the novolac-type phenolic resin. Owing to this fact, the resin composition of the present invention gives improved mechanical properties as compared with those given by the conventional resin composition using the filler, since in a system wherein the filler which does not react with the resin component of the resin composition is added to the resin composition, as in the conventional technique, an interface exists between the filler and the resin component within the carbon-fiber-reinforced composite material, so that delamination or the like takes place at the interface, resulting in deterioration of the strength or other properties of a formed product. Further, the novolac-type phenolic resin contained in the resin composition of the present invention is considered to have a higher degree of adhesiveness with respect to the carbon fiber, than the resol-type phenolic resin. Accordingly, the resin composition of the present invention can give more excellent mechanical properties than those given by the system in which the resol-type phenolic resin is used alone.

A ratio between the resol-type phenolic resin and the novolac-type phenolic resin which are used as the resin components of the resin composition according to the present invention is preferably held within a range between 95:5 and 50:50, on the mass basis, more preferably between 90:10 and 55:45, and further preferably between 70:30 and 55:45. Where the amount of the resol-type phenolic resin is more than 95% by mass of a total amount of the resol-type phenolic resin and the novolac-type phenolic resin, namely, where the amount of the novolac-type phenolic resin is less than 5% by mass, it is difficult to sufficiently achieve the above-described advantages in terms of the adhesiveness of the novolac-type phenolic resin with respect to the carbon fiber and the ease of handling. On the other hand, where the amount of the resol-type phenolic resin is less than 50% by mass of the total amount of the resol-type and novolac-type phenolic resins, namely, where the amount of the novolac-type phenolic resin is more than 50% by mass, the viscosity of the resin composition is excessively increased, giving rise to a risk that the carbon fiber may not be sufficiently impregnated with the resin composition.

The specific alcohol used as one of the essential components of the resin composition according to the present invention is selected from a group consisting of methanol, ethanol and n-propylalcohol. Any one or any combination of these alcohols may be used. These alcohols have lower degrees of viscosity, lower boiling points and higher degrees of volatility, than other organic solvents. Further, the phenolic resins are more dissoluble in these alcohols than in the other organic solvents.

By adding a small amount of at least one alcohol selected from the group consisting of methanol, ethanol and n-propylalcohol, into the resin composition according to the present invention, the viscosity of the resin composition can be effectively reduced. Accordingly, in a process of impregnating the carbon fiber with the resin composition to obtain the precursor, the carbon fiber can be sufficiently impregnated with the resin composition. Further, the above-indicated alcohols are considered to be compatible with the carbon fiber and a bundling agent adhering to surfaces of the carbon fiber. Accordingly, the adhesiveness of the resin components dissolved in the alcohols with respect to the carbon fiber can be advantageously improved, and the carbon fiber can be more advantageously impregnated with the resin composition. Moreover, in a process of aging the obtained precursor to improve its ease of handling, it is possible to dry the precursor and increase its viscosity, at a relatively low temperature and within a short time, owing to the high degree of volatility of the at least one alcohol contained in the resin composition.

An amount of the alcohol is adequately determined depending on an intended application. The alcohol is generally used in an amount of about 1-8 parts by mass per 100 parts by mass of the total amount of the resol-type phenolic resin and the novolac-type phenolic resin, and preferably about 3-7 parts by mass. Where the amount of the alcohol is less than 1 part by mass, it is difficult to sufficiently reduce the viscosity of the resin composition, so that it is difficult to sufficiently impregnate the carbon fiber with the resin composition in the impregnation process. Further, it is considered that the alcohol also serves as a solvent for the novolac-type phenolic resin, together with the resol-type phenolic resin. Therefore, where the amount of the alcohol is excessively small, the novolac-type phenolic resin cannot be sufficiently dissolved and dispersed, giving rise to a problem of uneven curing in a curing reaction. On the other hand, where the amount of the alcohol is more than 8 parts by mass, it is difficult to sufficiently volatilize the alcohol in the aging process, so that the aging process is required to be carried out at a higher temperature for a longer period of time to obtain the desired degree of ease of handling. As a result, polymerization of the resin composition proceeds, giving rise to problems in a forming process. Further, in the case where the alcohol is not sufficiently volatilized in the aging process, and the forming process is performed while the precursor contains a large amount of the alcohol, the alcohol may remain within the formed product, or pores may be formed within the formed product due to a large amount of a gas generated by heating, giving rise to a risk that the formed product cannot exhibit the satisfactory mechanical properties.

The resin composition according to the present invention may further contain conventionally used additives. For example, various known additives such as a curing agent, a thickening agent, an internal mold releasing agent, a flame retardant and a coupling agent may be added into the resin composition. Specific examples of the curing agent include hexamethylenetetramine. Specific examples of the thickening agent include alkaline-earth metal hydroxides and alkaline-earth metal oxides such as calcium hydroxide and magnesium oxide. Specific examples of the internal mold releasing agent include saturated fatty acids and metal salts thereof such as stearic acid and zinc stearate. Specific examples of the flame retardant include: metal hydroxides such as aluminum hydroxide; antimony compounds such as antimony trioxide and antimony pentoxide; phosphorous compounds; and halogen compounds. Specific examples of the silane coupling agent include a silane coupling agent, a titanate coupling agent, an aluminate coupling agent and a zirconate coupling agent.

Various kinds of filler may be further added into the resin composition according to the present invention, as long as the addition of the filler does not impede the objects of the invention. At least one of inorganic fillers and organic fillers may be used. It is possible to use a mixture of a plurality of kinds of fillers. As in the production of the conventional resin composition, it can be expected that the addition of the filler permits reinforcement of the carbon-fiber-reinforced composite material, reduction of its weight, improvement of its flame retardancy, reduction of its cost and improvement of its ease of handling.

Examples of the inorganic fillers which may be used in the present invention include calcium carbonate, aluminum hydroxide, barium sulfate, clay, talc, silica, glass beads, alumina, mica, graphite and carbon black. Examples of the organic fillers include a styrene resin and an imide resin. The form of the filler is not particularly limited, and the filler may take the form of fibers or granules, for example. It is preferable that the filler takes the form of granules, since such filler can be easily dispersed. Although a size of the granules is not particularly limited, a diameter of the granules is preferably not larger than $100\mu m$, and more preferably not larger than $30\mu m$. Where the diameter of the granules is larger than $100\mu m$, it is difficult to uniformly disperse the filler in the resin composition, giving rise to a risk of inhomogeneity of the precursor and the end product.

An amount of the filler added into the resin composition is not unequivocally determined, and is adequately determined depending on an amount of the carbon fiber, the required mechanical properties and the like. The filler may be added into the resin composition in an amount of generally not more than 100 parts by mass per 100 parts by mass of the total amount of the resol-type phenolic resin and the novolac-type phenolic resin, and preferably not more than 50 parts by mass.

The resin composition according to the present invention can be produced by mixing the above-described resol-type phenolic resin, novolac-type phenolic resin and specific alcohol, and the filler and other additives used as necessary, according to a conventional method. A known mixer conventionally used in production of the resin composition is adequately selected and used to mix the components of the resin composition.

In the production of the resin composition, in order to add the novolac-type phenolic resin and the specific alcohol into the resol-type phenolic resin, it is recommended to dissolve the novolac-type phenolic resin in the specific alcohol beforehand, and then add the thus obtained resin varnish into the resol-type phenolic resin. By dissolving the novolac-type phenolic resin in the specific alcohol beforehand, the novolac-type phenolic resin can be uniformly dispersed and mixed in the resol-type phenolic resin. In the case where it is difficult to dissolve a whole amount of the novolac-type phenolic resin in the alcohol, it is advantageous to pulverize the novolac-type phenolic resin, mix the thus obtained powder of the novolac-type phenolic resin with the resol-type phenolic resin, stir the thus obtained mixture to uniformly disperse the powder, add the alcohol into the mixture and then stir the mixture, whereby the novolac-type phenolic resin is uniformly dispersed in the resol-type phenolic resin.

The thus obtained resin composition according to the present invention is used to produce the precursor of the carbon-fiber-reinforced composite material by impregnating the carbon fiber with the resin composition. The form of the precursor is not particularly limited, but the precursor in the form of the sheet molding compound (SMC) or the bulk molding compound (BMC) is preferred for reasons that: the filler can be easily added into the precursor; an amount of the carbon fiber to be contained in the precursor can be selected within a wide range, so that a wide variety of the precursor may be obtained; and the precursor has fluidity, so that the shape of the end product is less limited, for example. The SMC is particularly preferred, since the carbon fiber contained in the SMC is relatively long as compared with short carbon fibers used to produce other forms of the precursor, so that the carbon fiber contained in the SMC has a superior effect to reinforce the carbon-fiber-reinforced composite material.

As the carbon fiber, any one or a mixture of PAN (polyacrylonitrile)-based carbon fibers and pitch-based carbon fibers may be used. The carbon fiber may be used in an amount of not more than 150 parts by mass per 100 parts by mass of the resin composition, and preferably not more than 120 parts by mass. More than 150 parts by mass of the carbon fiber causes shortage of the resin composition serving as the binder of the carbon fiber, so that the carbon fiber and the resin composition cannot be sufficiently combined with each other. As a result, the effect of the carbon fiber to reinforce the carbon-fiber-reinforced composite material cannot be sufficiently exhibited, and it is difficult to achieve the high degree of mechanical strength of the composite material. The form and arrangement of the carbon fiber are not particularly limited, and are adequately selected from cloth, non-woven cloth, roving, tow, and chopped tow, for example. In the case where the carbon fiber in the form of the chopped tow is used, a length of the carbon fiber is not particularly limited, and is adequately selected depending on the form of the precursor. For example, where the carbon fiber is used to produce the SMC, the length of the carbon fiber is generally held within a range of 5-100mm, and preferably within a range of about 10-50mm.

A typical example of a method of producing the precursor in the form of the SMC is described below. Initially, by using a known production machine for the SMC, each of upper and lower carrier films is coated with a paste of the resin composition described above, such that the paste has a substantially uniform thickness within a range of about 0.3-2.0mm. Then, a predetermined amount of the carbon fiber cut into a predetermined length is dispersed on the paste applied to the lower carrier film. The upper carrier film is superposed on the lower carrier film, such that the dispersed carbon fiber is interposed between the pastes applied to the respective upper and lower carrier films. The thus mutually superposed upper and lower carrier films are passed through a nip between impregnation rollers, whereby the carbon fiber is impregnated with the resin composition. Then, an aging treatment is conducted as necessary, whereby the intended precursor is obtained. In this respect, it is noted that polyethylene films, polypropylene films or the like are generally used as the carrier films. The aging treatment is one of pretreatments conducted before the forming process. Where the aging treatment is conducted, it is advantageous to conduct a heat treatment at a temperature within a range of 40-70°C for about 5-100 hours.

The thus obtained precursor of the carbon-fiber-reinforced composite material according to the present invention is formed into a desired shape to give the intended carbon-fiber-reinforced composite material. As a process for forming the carbon-fiber-reinforced composite material from its precursor, various conventional forming processes such as hot pressing may be employed. Where the precursor takes the form of the SMC, the hot pressing is preferably employed. Specifically described, the hot pressing is performed by: providing a die which gives the form of the intended formed article and which has upper and lower members that can be separated from each other; charging the die with a required amount of the SMC; heating and pressurizing the SMC within the die; and removing the intended formed article out of the die by opening the die. A temperature, pressure and the like at which the intended formed article is formed are adequately selected depending on the shape or the like of the intended formed article. The temperature within a range of 100-200°C is preferably employed, for example. By using the precursor in the form of the SMC and the BMC, the carbon-fiber-reinforced composite material as the formed article can be produced with a high degree of formability. The thus obtained carbon-fiber-reinforced composite material can be advantageously used for applications such as structural members of a railway car, an aircraft, and an automobile, for example.

In the present invention, a carbon-fiber-reinforced carbon material can be obtained by firing and carbonizing the carbon-fiber-reinforced composite material obtained as described above. The thus obtained carbon-fiber-reinforced carbon material is characterized in that its weight measured after the firing and carbonizing operation is lighter by only a small amount than a weight of the composite material measured before the firing and carbonizing operation, and a residual carbon ratio or an amount of residual carbon of the carbon material is extremely high. Accordingly, it is possible to obtain the carbon-fiber-reinforced carbon material which suffers from small amounts of difference in the weight and dimensions before and after the firing and carbonizing operation, and which has a high density. After the firing and carbonizing operation, pores in the composite material are filled with the resin composition, so that a time required for a re-impregnating process can be reduced, and a time required for the entire process and a cost of production of the carbon-fiber-reinforced carbon material can be reduced. The residual carbon ratio can be further improved by using carbonaceous fillers such as graphite and carbon black selected from among the various kinds of fillers. The firing and carbonizing operation for producing the carbon-fiber-reinforced carbon material is conducted according to known procedures under conventionally used conditions.

EXAMPLES

To clarify the present invention more specifically, some examples of the invention will be described. It is to be understood that the invention is not limited to the details of the illustrated examples, and may be embodied with various other changes, modifications and improvements, which are not illustrated herein and which may occur to those skilled in the art, without departing from the spirit and the scope of the invention.

- Measurement of flexural strength and flexural modulus of elasticity -

Flexural strength and flexural modulus of elasticity were measured according to JIS K6911 by conducting a three-point flexural test using a flexural test machine. Test pieces having a length of 40mm, a width of 10mm and a thickness of 2mm were provided. The test was conducted under the following conditions: a test rate of 5mm/min.; a support span of 32mm; and support rollers having a radius of curvature of 5mm. The flexural strength was obtained by conducting the test on 10 test pieces and calculating an average value of the flexural strength of the 10 test pieces. The flexural modulus of elasticity was obtained by using S-S curves (stress-strain curves) obtained by the measurement of the flexural strengths of the respective 10 pieces and calculating an average value of modulus of elasticity of the 10 test pieces at a load within a range of 50-100N.

(Example 1)

80 parts by mass of a resol-type phenolic resin ("AKP-012" available from ASAHI ORGANIC CHEMICALS INDUSTRY CO., LTD., JAPAN) having a water content of 20.5% as measured by the Karl-Fischer method and a number average molecular weight of 362, and 20 parts by mass of a novolac-type phenolic resin ("SP1010" available from ASAHI ORGANIC CHEMICALS INDUSTRY CO., LTD.) having a number average molecular weight of 1000 were put into a vessel and mixed and stirred together, with a mixer for about 5 minutes. Then, 5 parts by mass of methanol as an alcohol was introduced into the vessel, and the contents in the vessel were further mixed and stirred with the mixer for about 3 minutes. 1 part by mass of magnesium oxide and 1 part by mass of calcium hydroxide as thickening agents and 1 part by mass of zinc stearate as an internal mold releasing agent were introduced into the vessel, and the contents in the vessel were mixed and stirred with a mixer for about 3 minutes, whereby an intended resin composition was obtained.

Then, 108 parts by mass of a carbon fiber was impregnated with the thus obtained resin composition by using an impregnating machine for SMC, whereby the SMC was formed as a precursor of a carbon-fiber-reinforced composite material. In this respect, it is noted that polyethylene films having a thickness of 30μm and a width of 660mm were used as carrier films, and a PAN-based carbon fiber ("TR50S-15L-AD" available from MITSUBISHI RAYON CO., LTD., JAPAN) was used as the carbon fiber.

In production of the SMC, the lower carrier film was uniformly coated with the resin composition obtained as described above over a width of 500mm in an amount of 250g/m. Then, by adjusting a rotating speed of a roving cutter, the carbon fiber cut into pieces having a length of 25.4mm was uniformly dispersed on the resin composition applied to the lower carrier film, over a width of 500mm in an amount of 500g/m. On the other hand, the upper carrier film was uniformly coated with the above-described resin composition over a width of 500mm in an amount of 250g/m. The upper and lower carrier films were superposed on each other, such that their surfaces coated with the resin composition were opposed to each other and the carbon fiber was interposed therebetween. Then, the upper and lower carrier films superposed on each other were compressed by using a pair of impregnation rollers, to impregnate the carbon fiber with the resin composition. After an aging treatment was conducted at a temperature of 40°C for 72 hours, the intended SMC was obtained.

The upper and lower carrier films were removed from the thus obtained SMC, and the SMC was trimmed into a multiplicity of pieces having dimensions of 15cm x 15cm. The pieces of the SMC were stacked on each other, such that the thus obtained stack of the pieces has a weight of 110g. The stack was formed by hot pressing, whereby a carbon-fiber-reinforced composite material having the desired shape was obtained. The hot pressing was conducted under the following conditions: a temperature of 150°C; a pressing force of 16 tons; and a time period of 10 minutes. A die used for the hot pressing has a cavity with a length of 18cm, a width of 18cm and a depth of 2mm. In order to discharge condensation water generated at the time of curing of the phenolic resins, from the inside of the die, a bumping operation was conducted by opening the die after 5 seconds and 15 seconds from the beginning of pressurizing.

The thus obtained carbon-fiber-reinforced composite material was cut into 10 test pieces having a width of 10mm and a length of 40mm, by using a circular saw. The test pieces were measured of their flexural strength and flexural modulus of elasticity according the methods described above. Results of the measurement are shown in Table 1 given below.

(Examples 2 and 3)

Resin compositions were prepared as in the Example 1, except that ethanol or n-propylalcohol was used as the alcohol. By using the resin compositions, carbon-fiber-reinforced composite materials (and their precursors) were produced as in the Example 1. The flexural strength and flexural modulus of elasticity of the composite materials were measured as in the Example 1. Results of the measurement are shown in Table 1.

(Example 4)

A carbon-fiber-reinforced composite material was produced as in the Example 1, except that a pitch-based carbon fiber ("K63712" available from Mitsubishi Plastics, Inc., JAPAN) was used as the carbon fiber. The flexural strength and flexural modulus of elasticity of the composite material were measured. Results of the measurement are shown in Table 1.

(Examples 5 and 6)

Carbon-fiber-reinforced composite materials were produced as in the Example 1, except that the resol-type phenolic resin and the novolac-type phenolic resin were used at respective ratios shown in Table 1. The flexural strength and flexural modulus of elasticity of the composite materials were measured. Results of the measurement are shown in Table 1.

(Examples 7 and 8)

Carbon-fiber-reinforced composite materials were produced as in the Example 5, except that the alcohol and the carbon fiber were used in respective amounts shown in Table 1. The flexural strength and flexural modulus of elasticity of the composite materials were measured. Results of the measurement are shown in Table 1.

(Comparative Example 1)

A carbon-fiber-reinforced composite material was produced as in the Example 1, except that only the resol-type phenolic resin was used as a resin component in the resin composition, and the alcohol was not used, while the carbon fiber was used in an amount shown in Table 2 given below. The flexural strength and flexural modulus of elasticity of the composite material were measured. Results of the measurement are shown in Table 2.

(Comparative Example 2)

A carbon-fiber-reinforced composite material was produced as in the Comparative Example 1, except that the alcohol (methanol) was added and the carbon fiber was used in an amount shown in Table 2. The flexural strength and flexural modulus of elasticity of the composite material were measured. Results of the measurement are shown in Table 2.

(Comparative Examples 3 and 4)

Carbon-fiber-reinforced composite materials were produced as in the Example 1, except that the alcohol (methanol) was not used and the carbon fibers (PAN-based and pitch-based) were used in respective amounts shown in Table 2. The flexural strength and flexural modulus of elasticity of the composite materials were measured. Results of the measurement are shown in Table 2.

(Comparative Examples 5 to 8)

Resin compositions were prepared as in the Example 1, except that various kinds of organic solvents shown in Table 2 were used in place of the alcohol. Then, carbon-fiber-reinforced composite materials were produced, and their flexural strength and flexural modulus of elasticity were measured. Results of the measurement are shown in Table 2.

Table 1

| | | | Example 1 | Example 2 | Example 3 | Example 4 | Example 5 | Example 6 | Example 7 | Example 8 |
|---|---|---|---|---|---|---|---|---|---|---|
| Resin Composition (parts by weight) | Resol-type Phenolic Resin | | 80 | 80 | 80 | 80 | 60 | 50 | 60 | 60 |
| | Novolac-type Phenolic Resin | | 20 | 20 | 20 | 20 | 40 | 50 | 40 | 40 |
| | Alcohol | Methanol | 5 | — | — | 5 | 5 | 5 | 1 | 8 |
| | | Ethanol | — | 5 | — | — | — | — | — | — |
| | | n-propylalcohol | — | — | 5 | — | — | — | — | — |
| | Thickening Agent | Magnesium Oxide | 1 | 1 | 1 | 1 | 1 | 1 | 1 | 1 |
| | | Calcium Hydroxide | 1 | 1 | 1 | 1 | 1 | 1 | 1 | 1 |
| | Internal Mold Releasing Agent | Zinc Stearate | 1 | 1 | 1 | 1 | 1 | 1 | 1 | 1 |
| | PAN-based Carbon Fiber | | 108 | 108 | 108 | — | 108 | 108 | 104 | 111 |
| | Pitch-based Carbon Fiber | | — | — | — | 108 | — | — | — | — |
| Properties of Carbon-fiber-reinforced Composite Material | Flexural Strength (MPa) | | 467 | 455 | 362 | 242 | 497 | 402 | 360 | 412 |
| | Flexural Modulus of Elasticity (GPa) | | 31.8 | 33.7 | 30.5 | 48.2 | 34.1 | 22.4 | 25.4 | 26.1 |

EP 2 915 847 A1

Table 2

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Resin Composition (parts by weight) | Resol-type Phenolic Resin | | 100 | 100 | 80 | 80 | 80 | 80 | 80 | 80 |
| | Novolac-type Phenolic Resin | | — | — | 20 | 20 | 20 | 20 | 20 | 20 |
| | Solvent | Methanol | — | 5 | — | — | — | — | — | — |
| | | Isopropylalcohol | — | — | — | — | 5 | — | — | — |
| | | Acetone | — | — | — | — | — | 5 | — | — |
| | | Methyl Ethyl Ketone | — | — | — | — | — | — | 5 | — |
| | | Ethyl Acetate | — | — | — | — | — | — | — | 5 |
| | Thickening Agent | Magnesium Oxide | 1 | 1 | 1 | 1 | 1 | 1 | 1 | 1 |
| | | Calcium Hydroxide | 1 | 1 | 1 | 1 | 1 | 1 | 1 | 1 |
| | Internal Mold Releasing Agent | Zinc Acetate | 1 | 1 | 1 | 1 | 1 | 1 | 1 | 1 |
| | PAN-based Carbon Fiber | | 103 | 108 | 103 | — | 108 | 108 | 108 | 108 |
| | Pitch-based Carbon Fiber | | — | — | — | 103 | — | — | — | — |
| Properties of Carbon-fiber-reinforced Composite Material | Flexural Strength (MPa) | | 313 | 330 | 306 | 138 | 257 | 243 | 285 | 292 |
| | Flexural Modulus of Elasticity (GPa) | | 23.5 | 22.7 | 21.6 | 24.6 | 17.5 | 20.3 | 21.1 | 21 |

EP 2 915 847 A1

As is apparent from the results shown in Tables 1 and 2, the flexural strength and the flexural modulus of elasticity of the carbon-fiber-reinforced composite material produced in the Example 1 are significantly improved as compared with those of the carbon-fiber-reinforced composite materials produced in the Comparative Examples 1 to 3. In the Example 1, the resin composition prepared by using the resol-type phenolic resin, the novolac-type phenolic resin and methanol (the alcohol) as the essential components, is used as the binder or the matrix of the composite material. In the Comparative Examples 1 to 3, the resin compositions were prepared by merely using the resol-type phenolic resin, a combination of the resol-type phenolic resin and methanol, or a combination of the resol-type phenolic resin and the novolac-type phenolic resin.

Also, it is recognized that all of the carbon-fiber-reinforced composite materials produced in the Examples 1-3 by using the resin compositions prepared by using methanol, ethanol and n-propylalcohol as the alcohols are superior in their flexural strength and flexural modulus of elasticity, to the carbon-fiber-reinforced composite materials produced in the Comparative Examples 5-8 by using the resin compositions prepared by using isopropylalcohol, acetone, methyl ethyl ketone and ethyl acetate as the solvents.

Further, it is recognized that the flexural strength and the flexural modulus of elasticity of the carbon-fiber-reinforced composite material produced in the Example 4 by using the pitch-based carbon fiber are improved as compared with those of the carbon-fiber-reinforced composite material produced in the Comparative Example 4. In the Example 6, a significant improvement is achieved in terms of the flexural strength, rather than the flexural modulus of elasticity. Additionally, it is recognized that both of the flexural strength and the flexural modulus of elasticity of the carbon-fiber-reinforced composite materials produced in the Examples 5, 7 and 8 are considerably improved as compared with those of the carbon-fiber-reinforced composite materials produced in the Comparative Examples. In the Examples 5, 7 and 8, the carbon-fiber-reinforced composite materials were produced by using the resin compositions prepared by using the respective different amounts of methanol (the alcohol). In the Comparative Examples, the carbon-fiber-reinforced composite materials were produced by using the resin compositions which contain no alcohol.

Next, carbon-fiber-reinforced carbon materials were obtained by firing and carbonizing the carbon-fiber-reinforced composite materials produced in the above-described Examples and Comparative Examples. The carbon-fiber-reinforced carbon materials were measured of their residual carbon ratio (amount of residual carbon) by a method described below.

- Measurement of residual carbon ratio -

Initially, a test piece was cut from each carbon-fiber-reinforced composite material, and a weight "A" of the test piece was measured before a firing and carbonizing operation. Then, the test piece was carbonized by firing, whereby the test piece was converted into the carbon-fiber-reinforced carbon material. After the firing and carbonizing operation, a weight "B" of the carbon-fiber-reinforced carbon material was measured. The residual carbon ratio (amount of residual carbon) was calculated based on the following formula (1):

$$\text{Residual Carbon Ratio (\%)} = (\text{Weight "B" after Firing} / \text{Weight "A" before Firing}) \times 100 \cdots (1)$$

(Example 9)

A sheet of the carbon-fiber-reinforced composite material produced in the Example 1 was cut into a test piece of 10cm x 10cm. The test piece was placed in a firing furnace, and the firing furnace was charged with a nitrogen gas to make the inside of the firing furnace an inert atmosphere. Then, a temperature of the inside of the firing furnace was raised to 900°C at a rate of 1°C/min., held at 900°C for one hour, and then lowered to 40°C at a rate of 10°C/min, whereby the test piece was converted into the carbon-fiber-reinforced carbon material. The residual carbon ratio of the carbon-fiber-reinforced carbon material was calculated based on the weights of the test piece before and after firing, as described above. A calculated value is shown in Table 3 given below.

(Examples 10 and 11)

Carbon-fiber-reinforced composite materials (sheet materials) were produced as in the Examples 1 and 4, except that graphite ("PAG-5" available from Nippon Graphite Industries, ltd., JAPAN) was added as a filler in an amount shown in Table 3. Test pieces were cut from the carbon-fiber-reinforced composite materials, and carbonized by firing to produce carbon-fiber-reinforced carbon materials, as in the Example 9. Residual carbon ratios of the carbon-fiber-reinforced carbon materials were calculated, results of which are shown in Table 3.

(Comparative Examples 9 to 11)

The carbon-fiber-reinforced composite materials obtained in the Comparative Examples 1 to 3 were carbonized by firing to produce carbon-fiber-reinforced carbon materials, as in the Example 9. Residual carbon ratios of the carbon-fiber-reinforced carbon materials were calculated, results of which are shown in Table 3.

Table 3

| | | | Example 9 | Example 10 | Example 11 | Comparative Example 9 | Comparative Example 10 | Comparative Example 11 |
|---|---|---|---|---|---|---|---|---|
| Resin Composition (parts by weight) | Resol-type Phenolic Resin | | 80 | 80 | 80 | 100 | 100 | 80 |
| | Novolac-type Phenolic Resin | | 20 | 20 | 20 | — | — | 20 |
| | Alcohol | Methanol | 5 | 5 | 5 | — | 5 | — |
| | Thickening Agent | Magnesium Oxide | 1 | 1 | 1 | 1 | 1 | 1 |
| | | Calcium Hydroxide | 1 | 1 | 1 | 1 | 1 | 1 |
| | Internal Mold Releasing Agent | Zinc Stearate | 1 | 1 | 1 | 1 | 1 | 1 |
| | Graphite | | — | 43 | 43 | — | — | — |
| | PAN-based Carbon Fiber | | 108 | 151 | — | 103 | 108 | 103 |
| | Pitch-based Carbon Fiber | | — | — | 151 | — | — | — |
| Properties of Carbon-fiber-reinforced Carbon Material | Residual Carbon Ratio (%) | | 85.5 | 90.2 | 90.4 | 82.8 | 83.2 | 83.0 |

As is apparent from the results shown in Table 3, it is recognized that in the Examples 9 to 11 according to the present invention, in which the carbon-fiber-reinforced carbon materials were produced from the carbon-fiber-reinforced composite materials obtained by using the resin compositions containing the resol-type phenolic resin, the novolac-type phenolic resin and methanol (the alcohol) as the essential components, the residual carbon ratios of the carbon-fiber-reinforced carbon materials are effectively improved as compared with those of the carbon-fiber-reinforced carbon materials produced in the Comparative Examples 9 to 11, in which the carbon-fiber-reinforced carbon materials were produced from the carbon-fiber-reinforced composite materials obtained by using the resin compositions prepared by merely using the resol-type phenolic resin, the combination of the resol-type phenolic resin and the alcohol (methanol), or the combination of the resol-type phenolic resin and the novolac-type phenolic resin.

**Claims**

1. A resin composition comprising, as essential components, a resol-type phenolic resin, a novolac-type phenolic resin, and at least one alcohol selected from a group consisting of methanol, ethanol and n-propylalcohol.

2. The resin composition according to claim 1, wherein the resol-type phenolic resin and the novolac-type phenolic resin are used at a ratio within a range between 95 : 5 and 50 : 50, on a mass basis.

3. The resin composition according to claim 1 or 2, wherein the at least one alcohol is used in an amount of 1-8 parts by mass per 100 parts by mass of a total amount of the resol-type phenolic resin and the novolac-type phenolic resin.

4. A precursor of a carbon-fiber-reinforced composite material obtained by impregnating a carbon fiber with the resin composition according to any one of claims 1 to 3.

5. The precursor of the carbon-fiber-reinforced composite material according to claim 4, wherein at least one of a PAN-based carbon fiber and a pitch-based carbon fiber is used as the carbon fiber.

6. The precursor of the carbon-fiber-reinforced composite material according to claim 4 or 5, in the form of a sheet molding compound or a bulk molding compound.

7. A carbon-fiber-reinforced composite material obtained by forming the precursor according to any one of claims 4 to 6.

8. The carbon-fiber-reinforced composite material according to claim 7, obtained by forming the precursor by hot pressing.

9. A carbon-fiber-reinforced carbon material obtained by firing and carbonizing the carbon-fiber-reinforced composite material according to claim 7 or 8.

10. A structural member of an aircraft, a railway car or an automobile, or a general industrial structural member, produced by using the carbon-fiber-reinforced composite material according to claim 7 or 8, or the carbon-fiber-reinforced carbon material according to claim 9.

## INTERNATIONAL SEARCH REPORT

| | International application No. |
|---|---|
| | PCT/JP2013/075525 |

A. CLASSIFICATION OF SUBJECT MATTER
*C08L61/06*(2006.01)i, *C08J5/24*(2006.01)i, *C08K5/05*(2006.01)i, *C08K7/06*
(2006.01)i

According to International Patent Classification (IPC) or to both national classification and IPC

B. FIELDS SEARCHED

Minimum documentation searched (classification system followed by classification symbols)
C08L1/00-101/14, C08J5/00-5/24

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)
CAplus(STN)

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2013-16476 A (Toray Industries, Inc.),<br>24 January 2013 (24.01.2013),<br>claims 1 to 8; paragraphs [0077] to [0079]<br>(Family: none) | 1-9<br>10 |
| X<br>A | JP 61-133263 A (Toshiba Chemical Corp.),<br>20 June 1986 (20.06.1986),<br>claims 1, 2; page 3, upper right column to<br>lower right column<br>(Family: none) | 1-3<br>4-10 |
| A | JP 5-51256 A (Tonen Corp.),<br>02 March 1993 (02.03.1993),<br>claim 1; paragraphs [0013], [0020] to [0022]<br>(Family: none) | 1-10 |

☒ Further documents are listed in the continuation of Box C.　　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 December, 2013 (02.12.13) | 10 December, 2013 (10.12.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/075525

C (Continuation).  DOCUMENTS CONSIDERED TO BE RELEVANT

| Category* | Citation of document, with indication, where appropriate, of the relevant passages | Relevant to claim No. |
|---|---|---|
| A | JP 54-139956 A  (Matsushita Electric Works, Ltd.), 30 October 1979 (30.10.1979), claims 1, 2; page 2, lower right column to page 3, lower left column (Family: none) | 1-10 |
| A | JP 58-213672 A  (Kanae Chemical Industry Co., Ltd.), 12 December 1983 (12.12.1983), claims 1, 2; page 6, lower right column, table 2 (Family: none) | 1-10 |
| A | JP 9-12840 A  (Sumitomo Bakelite Co., Ltd.), 14 January 1997 (14.01.1997), claims 1 to 6; paragraphs [0019], [0024] (Family: none) | 1-10 |
| A | JP 9-291197 A  (Sumitomo Bakelite Co., Ltd.), 11 November 1997 (11.11.1997), claims 1 to 3; paragraph [0009] (Family: none) | 1-10 |

Form PCT/ISA/210 (continuation of second sheet) (July 2009)

**EP 2 915 847 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004269812 A